(19) Europäisches Patentamt
European Patent Office
Office européen des brevets

(11) **EP 3 655 370 B1**

(12) **FASCICULE DE BREVET EUROPEEN**

(45) Date de publication et mention de la délivrance du brevet:
**01.05.2024 Bulletin 2024/18**

(21) Numéro de dépôt: **18739552.0**

(22) Date de dépôt: **17.07.2018**

(51) Classification Internationale des Brevets (IPC):
***C03C 17/34*** (2006.01)

(52) Classification Coopérative des Brevets (CPC):
**C03C 17/3417; C03C 17/3441;** C03C 2217/75;
C03C 2217/94; C03C 2218/32; C03C 2218/328

(86) Numéro de dépôt international:
**PCT/EP2018/069340**

(87) Numéro de publication internationale:
**WO 2019/016178 (24.01.2019 Gazette 2019/04)**

(54) **VERRE ANTI-CONDENSATION À ENTRETIEN FACILITÉ**

BESCHLAGFREIES, LEICHT ZU REINIGENDES GLAS

ANTI-CONDENSATION GLASS WITH EASY MAINTENANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2017 EP 17182375**

(43) Date de publication de la demande:
**27.05.2020 Bulletin 2020/22**

(73) Titulaire: **AGC Glass Europe
1348 Louvain-La-Neuve (BE)**

(72) Inventeurs:
• **TIXHON, Eric
4367 Crisnée (BE)**
• **MICHEL, Eric
57270 Uckange (FR)**
• **ARNOULT, Grégory
5380 Noville-Les-Bois (BE)**
• **MARIAGE, Fabian
7532 Beclers (BE)**

(74) Mandataire: **AGC Glass Europe
Technovation Centre
Intellectual Property Department
Rue Louis Blériot 12
6041 Gosselies (BE)**

(56) Documents cités:
EP-A1- 1 295 856          EP-A2- 1 518 836
WO-A1-2014/198543          FR-A1- 2 963 343
FR-A1- 3 018 801          US-A- 6 013 372
US-A1- 2003 162 033

**Description**

**1. Domaine de l'invention**

Le domaine de l'invention est celui des substrats en verre muni d'un revêtement multifonctionnel comportant à la fois une couche d'oxyde transparent conducteur et une couche hydrophile. Le revêtement de l'invention est caractérisé par une faible rugosité, une bonne hydrophilie et a en plus l'avantage d'empêcher la condensation d'eau. Ledit revêtement est chimiquement et mécaniquement durable. Sa faible rugosité offre en outre une résistance accrue aux griffes et marques. Le but de l'invention est également de décrire un procédé qui permet l'obtention de ce type de substrats.

Le verre est un matériau largement utilisé non seulement en architecture mais aussi dans l'automobile ou encore dans des applications intérieures comme les miroirs, les verres de douche, la décoration, l'électroménager... Une demande existe pour que l'industrie propose des substrats anticondensation et résistant aux griffes, dont l'entretien est facilité de façon durable.

**2. Solutions de l'art antérieur**

Comme décrit dans WO2014198543, il est bien connu qu'un vitrage peut se couvrir de condensation sous forme de buée ou de givre lorsque la température de sa surface exposée à l'air humide passe en dessous de la température de condensation de l'eau. La formation de buée ou de givre à la surface exposée d'un vitrage isolant est fréquente sur des vitrages multiples isolants à haute performance. De manière générale, pour bon nombre de ces applications, ce sont des vitrages multiples comportant au moins deux vitres en verre. Ces vitres sont disposées à distance l'une de l'autre, définissant un ou plusieurs espaces intermédiaires. Les cas échéant une ou plusieurs vitres comportent une couche d'isolation thermique sur une face orientée vers un espace intermédiaire. Pour d'autres applications, ce sont des simples vitrages ou des vitrages feuilletés. Ceci est particulièrement le cas pour les applications automobiles où la formation de givre à la surface extérieure est particulièrement problématique.

Grâce à l'isolation thermique les déperditions de chaleur à travers le vitrage de l'intérieur vers l'extérieur diminuent et en conséquence la probabilité que la température de la surface extérieure du vitrage isolant descende pendant la nuit en dessous du point de condensation augmente, d'autant plus lorsque le vitrage est exposé au ciel nocturne, dépourvu de nuages.

Il est aussi connu que la température de surface d'un vitrage peut être influencée par la présence d'un revêtement qui la recouvre et en modifie l'émissivité.

La face tournée vers l'extérieur de la vitre extérieure du vitrage multiple peut ainsi être recouverte d'un revêtement bas émissif. Ce revêtement bas émissif a pour effet de ralentir le refroidissement de la face du verre tournée vers l'extérieur. Ainsi le risque que la température de cette surface passe en dessous de la température de condensation de l'air humide à laquelle elle est exposée est diminué. Ce revêtement bas-émissif réduit alors l'apparition de condensation ou de givre sur la face extérieure du vitrage isolant, on dit qu'il a un effet anti-condensation ou antigivre.

La surface extérieure étant soumise à des conditions plus sévères d'agression chimique et mécanique, la couche doit être suffisamment résistante. Pour cette raison, on utilise généralement des couches plus dures comme celles que l'on obtient par des procédés de dépôt chimique en phase vapeur. A cet égard, EP0573325A1 mentionne que les oxydes transparents conducteurs (TCO) conviennent particulièrement pour remplir le rôle de couches basse-émissivité.

Le dépôt d'une couche entre la couche basse-émissivité et le substrat peut être intéressant à plusieurs égards. D'une part, la dite couche intermédiaire peut jouer le rôle de couche barrière aux ions alcalins du verre et d'autre part, l'ajustement de la nature et de l'épaisseur d'une telle sous-couche permet d'optimiser les aspects optiques comme par exemple, la teinte en transmission et en réflexion.

Outre la couche basse-émissivité, qui permet de réduire le risque de condensation, il est souhaitable que le vitrage présente une certaine hydrophilie.

Il est connu que le dioxyde de titane sous forme au moins partiellement cristallisée, lorsqu'il est soumis à une irradiation UV, présente un effet photocatalytique qui lui permet de dégrader les salissures organiques qui viennent à son contact. FR3018801A1, FR2963343A1, US2003/162033A1, EP1304366A1 et WO97/10186A1 présentent largement les différentes caractéristiques de cette couche, son mode de fonctionnement ainsi que ses procédés d'obtention. A côté de ces propriétés photocatalytiques, toujours sous irradiation UV, EP1304366A1 et EP1366000A2 montrent que le dioxyde de titane, présente aussi un caractère hydrophile qui se traduit par un angle de contact avec l'eau très faible, propriété qui permet d'obtenir l'effet recherché. EP882686B1 montre que le $TiO_2$ peut également être utilisé pour éviter la formation de buée et permet l'élimination des salissures résiduelles déposées en formant un film d'eau homogène à la surface du vitrage extérieur.

Pour déposer le dioxyde de titane, plusieurs méthodes bien connues de l'art antérieur existent (WO1997010186A1, EP1304366A1). Chaque méthode présente des avantages et des inconvénients qui en détermineront le choix. Notamment, le film de $TiO_2$ peut être déposé par pyrolyse en phase gazeuse (CVD), par voie humide (sol-gel) ou encore par déposition en phase gazeuse sous vide (PVD). Le dernier procédé se fait généralement à froid et permet d'obtenir une couche de dioxyde de titane qui est amorphe et nécessite dès lors un recuit pour être recristallisée. Selon la température de recuit utilisée la phase cristalline obtenue sera l'anatase ou le rutile. Le dépôt par sol-gel résulte en une couche épaisse et généralement plus poreuse, dont la préparation est aussi plus complexe. Enfin la pyrolyse en phase gazeuse fait intervenir des précurseurs qui sont dégradés sous l'effet de la température élevée, pour former une couche sur le verre. Ce procédé peut être effectué directement en ligne au moment de la production du verre, rendant cette voie particulièrement attractive et peu coûteuse. D'autant plus que la couche résultant d'un dépôt CVD est une couche plus dure, plus dense et présentant des propriétés de résistance mécanique et chimique importantes. Une telle couche peut notamment être utilisée en extérieur, sans revêtement de protection. Enfin, de par la méthode, la température de dépôt est très élevée et l'on obtient le $TiO_2$ directement avec un taux de cristallisation élevé.

La combinaison d'une couche à basse émissivité (TCO) et d'une couche $TiO_2$ au moins partiellement cristallisée permet d'obtenir un vitrage anticondensation hydrophile, comme le décrit notamment le brevet WO2014198543. Cet empilage présente une rugosité importante, généralement supérieure à 15 nm. Cette rugosité, généralement préférée car elle contribue à une meilleure activité photocatalytique et une meilleure hydrophilie, est aussi responsable d'un encrassement plus important par incrustation de salissures dans les aspérités de la surface, ainsi que d'une certaine difficulté à désincruster ces impuretés. En plus, la rugosité, si elle est trop importante, peut rendre la couche plus sensible aux rayures, griffes, traces, tâches.... Pour l'homme du métier, une telle sensibilité est problématique lors des différentes manipulations du vitrage ou de son utilisation. Plus particulièrement, dans le secteur des vitrages automobiles munis d'une couche basse-émissivité comme un TCO, la rugosité d'une telle couche soumise au balayage des essuie-glaces, présente généralement l'inconvénient de laisser des traces.

Ce que l'invention se propose d'améliorer, c'est précisément le problème lié à la question de la rugosité de l'empilage TCO / $TiO_2$. Comment obtenir une couche de $TiO_2$ déposée sur une couche d'oxyde transparent conducteur qui permette de conserver une bonne hydrophilie tout en présentant une surface difficile à salir et à griffer

## 3. Objectifs de l'invention

L'invention a notamment pour objectif de pallier aux inconvénients de l'art antérieur en proposant un substrat muni d'un revêtement faisant preuve à la fois de propriétés d'anti-condensation, d'antibuée de par son caractère hydrophile et qui est difficile à griffer et facile à nettoyer. En outre, le revêtement de l'invention doit pouvoir être soumis à des traitements thermiques tels la trempe ou le bombage, sans que ses propriétés visées par l'invention ne soient détériorées.

L'invention vise aussi un procédé économique et facile à mettre en oeuvre pour déposer un revêtement présentant à la fois une propriété anti-condensation et un fort caractère hydrophile et faisant preuve d'une bonne durabilité chimique et mécanique, tout particulièrement une bonne résistance aux griffes et rayures.

## 4. Exposé de l'invention

L'invention concerne un substrat en verre clair, extra-clair ou coloré, flotté de type silico-sodo-calcique, dont l'épaisseur est comprise entre 0,2 et 20 mm.

Le substrat en verre de l'invention est muni d'un revêtement hydrophile et lisse comportant au moins une couche d'oxyde transparent conducteur et au moins une couche d'un oxyde à caractère hydrophile.

La couche d'oxyde transparent conducteur (TCO) d'épaisseur comprise entre 150 et 500 nm, de préférence entre 250 et 350 nm, de manière encore plus préférée entre 300 et 325 nm, présente une faible émissivité et est généralement choisie parmi les oxydes transparents conducteurs tels par exemple l'oxyde d'indium dopé à l'étain (ITO), l'oxyde de zinc dopé à l'aluminium (ZnO:Al), l'oxyde de zinc dopé à l'indium (ZnO:In), l'oxyde de zinc dopé à l'étain (ZnO:Sn), l'oxyde d'étain dopé au fluor ($SnO_2$:F) ou l'oxyde d'étain dopé à l'antimoine ($SnO_2$:Sb), cette liste n'étant pas limitative. De manière bien connue, l'épaisseur de la couche de TCO est ajustée, en fonction de la nature de la couche, de manière à obtenir l'émissivité voulue, laquelle dépend des performances anti-condensation recherchées. L'émissivité de la couche de TCO est de préférence inférieure ou égale à 0,4, notamment inférieure ou égale à 0,3 et préférentiellement inférieure à 0,2.

Une couche ayant un caractère hydrophile est ensuite déposée sur la couche basse émissivité décrite précédemment. Cette couche est choisie parmi les oxydes de Ti, Sn, W, Zn, Si, Al, Ag, Co et les mélanges d'un ou de plusieurs de ces oxydes. L'épaisseur de la couche à caractère hydrophile est comprise entre 5 et 50 nm, de préférence entre 5 et 30 nm et de manière encore plus préférée entre 5 et 10 nm. Plus particulièrement, l'invention concerne la formation d'une couche de $TiO_2$ dont l'épaisseur est comprise entre 5 et 50 nm, de préférence entre 5 et 30 nm et de manière encore plus préférée entre 5 et 10 nm.

La couche de $TiO_2$ peut être dopée, notamment avec de l'étain dans des pourcentages atomiques de Sn/Ti inférieurs à 10%, de préférence inférieurs à 5%.

Avantageusement, une sous-couche ayant pour fonction de permettre la neutralisation de la couleur en réflexion de la vitre revêtue, c'est-à-dire éviter les couleurs interférentielles en réflexion, peut être insérée entre le substrat et la couche conductrice. Elle est de préférence en contact direct avec le substrat verrier et est avantageusement une monocouche constituée essentiellement d'oxynitrure de silicium, tel que $SiO_xN_y$, ou d'oxycarbures de silicium, tel que $SiO_xC_y$. L'indice de réfraction de cette sous-couche est avantageusement compris dans la plage allant de 1,65 à 1,75 et son épaisseur est de préférence comprise entre 55 et 95 nm. Les valeurs « x » et « y » sont choisies pour ajuster les valeurs des indices de réfraction. Alternativement la sous-couche de neutralisation peut être une couche mixte constituée essentiellement d'oxydes de Sn et Si, dont l'épaisseur est comprise entre 55 et 95 nm, avantageusement entre 60 et 90nm et très avantageusement entre 70 et 90nm.

Dans un autre mode de réalisation de l'invention, la sous-couche est une double sous-couche constituée d'une première sous-couche, plus proche du substrat, d'un matériau ayant un indice de réfraction plus élevé que celui du verre comme par exemple le $TiO_2$, le $SnO_2$ ou le ZnO, revêtue d'une deuxième sous-couche ayant un indice de réfraction plus bas que la première sous-couche. Cette deuxième sous-couche est par exemple une couche d'un oxyde de silicium, oxycarbure de silicium, tel que $SiO_xC_y$, ou oxynitrure de silicium, tel que $SiO_xN_y$, x étant inférieur ou égal à 2. L'épaisseur de la première sous-couche est de préférence comprise entre 5 nm et 15 nm lorsqu'il s'agit de TiOz et de préférence comprise entre 15 nm et 35 nm lorsqu'il s'agit de $SnO_2$ ou de ZnO. L'épaisseur de la deuxième sous-couche est de préférence comprise entre 15 nm et 40 nm lorsqu'il s'agit d'un oxyde, oxycarbure, ou oxynitrure de silicium.

La couche d'oxyde métallique conducteur est de préférence une couche d'oxyde d'étain dopée au fluor. Elle est obtenue par pyrolyse des précurseurs bien connus de l'homme du métier. Un dépôt par CVD permet l'obtention de couches généralement bien adhérentes au substrat, et de haute durabilité, ce qui est un avantage. Plus particulièrement, le SnOz:F est déposé à une température du verre comprise entre 750 et 550°C.

La couche hydrophile de $TiO_2$ est déposée à son tour, préférablement directement sur la couche d'oxyde métallique conducteur, et est aussi constituée par dépôt chimique en phase vapeur. Elle est obtenue par pyrolyse des précurseurs bien connus de l'homme du métier. Parmi les précurseurs généralement utilisés, il y a le tetraisopropoxide de titane ($Ti[OCH(CH_3)_2]_4$ nommé par la suite TTIP), le tétrachlorure de titane ($TiCl_4$), le tetrabutoxide de titane ($Ti(OCH_2CH_2CH_3)_4$), l'éthoxyde de titane (IV) ($Ti(OC_2H_5)_4$) ou tout mélange de ces précurseurs. Plus particulièrement, le TTIP est introduit au moyen d'un dispositif de revêtement au-dessus du verre à une température inférieure à celle utilisée pour le dépôt du SnOz:F.

Selon un premier mode de réalisation, l'empilage de couches ainsi constitué est ensuite poli de façon à en diminuer la rugosité. Conformément aux connaissances de l'homme du métier, ce polissage a un impact négatif sur l'hydrophilie.

Cependant, à la grande surprise de l'inventeur, la rugosité de l'empilage diminue beaucoup plus dans l'empilage de l'invention que ce qui était obtenu jusque-là suite au polissage d'une couche de $SnO_2$:F. En effet, lorsque la couche d'oxyde transparent conducteur est surmontée d'une couche hydrophile, le polissage permet d'atteindre des valeurs de $R_q$ inférieures à 9 nm, voire inférieures à 7 nm et voire même, inférieures à 5 nm. En effet, le polissage équivalent d'une couche d'oxyde transparent conducteur en l'absence d'une couche hydrophile permet seulement d'atteindre une rugosité de 9 nm.

Les inventeurs ont constaté que l'empilage de couches poli selon l'invention est beaucoup plus lisse au toucher et plus facile à nettoyer lorsqu'on le frotte avec un chiffon ou lorsqu'on racle sa surface, par exemple au moyen d'une raclette. L'empilage de couches poli selon l'invention est aussi plus difficilement marqué lors des manipulations, par exemple lorsqu'il entre en contact avec des pièces métalliques.

Selon un deuxième mode de réalisation, l'empilage de couches d'oxyde transparent conducteur et de couche hydrophile ainsi constitué et poli de façon à en diminuer la rugosité est traité thermiquement, par exemple par une trempe ou un bombage. Le traitement thermique auquel le substrat de ce mode de réalisation de l'invention est soumis implique des températures supérieures à 600°C et un maintien du substrat à ces température pendant des durées qui sont adaptées à l'épaisseur du substrat selon un procédé bien connu de l'homme du métier.

Ce deuxième mode de réalisation de l'invention, en plus de permettre la préparation d'un vitrage avec une rugosité beaucoup plus faible qu'attendu, permet également au vitrage de retrouver un caractère hydrophile significativement plus important que celui mesuré avant le traitement thermique. Cette observation est contraire à l'enseignement de l'art antérieur qui montre qu'une couche de TiOz polie et donc nettement moins rugueuse, présente une mauvaise hydrophilie. La rugosité après traitement thermique est sensiblement identique à la rugosité avant traitement thermique. Ce comportement tout à fait surprenant permet donc d'obtenir un substrat en verre revêtu qui présente à la fois une faible rugosité et un caractère hydrophile élevé, contournant ainsi les limitations de l'art antérieur.

La surface revêtue du vitrage est une surface extérieure. Les substrats en verre selon l'invention peuvent faire partie d'un vitrage simple ou multiple, il peut être utilisé pour l'automobile ou dans les applications intérieures.

L'invention sera mieux comprise en considérant les figures suivantes :

Figure 1 : rugosité $R_q$ d'empilages verre/$SiO_xC_y$/$SnO_2$:F et verre/$SiO_xC_y$/$SnO_2$:F/$TiO_2$ poli et non-poli.

Figure 2 : angles de contact, après irradiation UV, d'une goutte d'eau, sur des empilages verre/$SiO_xC_y$/$SnO_2$:F et verre/$SiO_xC_y$/$SnO_2$:F/$TiO_2$ polis et non-polis. Échantillons non traités thermiquement.

Figure 3 : angle de contact, après irradiation UV, d'une goutte d'eau sur des empilages verre/$SiO_xC_y$/$SnO_2$:F et verre/$SiO_xC_y$/$SnO_2$:F/$TiO_2$ polis et non-polis. Échantillons traités thermiquement.

Un série de verres revêtus par CVD a été réalisée, ces échantillons de verre clair portent tous une sous-couche de neutralisation en $SiO_xC_y$, une couche d'oxyde transparent de SnOz:F de 320 nm et une couche de TiOz dont on a fait varier l'épaisseur.

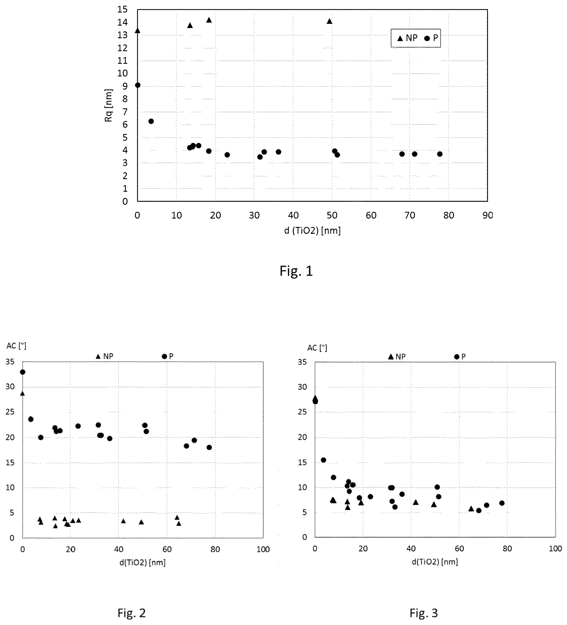

La figure 1 montre la rugosité $R_q$ (en nm) de certains de ces échantillons polis (P) et non-polis (NP) en fonction de l'épaisseur de la couche de TiOz (d(TiOz), en nm) déposée sur une couche de SnOz:F de 320 nm. Ces échantillons n'ont pas subi de traitement thermique. Les valeurs de $R_q$ sont sensiblement identiques sur des échantillons traités thermiquement ou non. La méthode de mesure de la rugosité est décrite plus en détail plus loin. La figure 1 montre qu' en absence de polissage, la rugosité d'une couche de SnOz:F, sans couche de TiOz, ayant une épaisseur d'environ 320 nm, est caractérisée par une valeur de $R_q$ de l'ordre de 13,5 nm.

Lorsqu'une couche de TiOz est déposée sur une couche de $SnO_2$:F, nous n'observons pas de modification de la rugosité sur l'empilage non poli. En effet quelle que soit l'épaisseur de TiOz, la rugosité reste comprise entre 13 et 14 nm.

Un polissage de la couche de SnOz:F sans $TiO_2$ permet de diminuer la valeur de la rugosité $R_q$ jusqu'à environ 9 nm.

Les inventeurs ont observé de façon surprenante que lorsque cet empilage comprend du TiOz sur le $SnO_2$:F, le polissage, en fonction de l'épaisseur de TiOz, permet d'atteindre des valeurs de rugosité étonnamment basses, inférieures à 5 nm, voire inférieures à 4 nm.

Il est donc ainsi possible d'atteindre des valeurs de rugosité qui jusque-là n'étaient pas accessible pour ce type d'empilage.

La figure 2 montre les angles de contact avec l'eau (AC, en degrés) après irradiation aux UV de certains de ces échantillons polis (P) et non-polis (NP) en fonction de l'épaisseur de la couche de TiOz (d(TiO$_2$), en nm) déposée sur une couche de SnOz:F de 320 nm. Ces échantillons n'ont pas subi de traitement thermique. La méthode de mesure de l'angle de contact est décrite plus en détail plus loin. La figure 2 montre qu'avant traitement thermique, l'angle de contact d'une couche de SnOz:F sans couche de TiOz est de l'ordre de 30°. Cette couche ne présente donc pas de caractère hydrophile. Lorsqu'une couche de TiOz est déposée sur le SnOz:F, il y a lieu de distinguer la version non polie de la version polie. En effet, dans le cas de la version non polie, l'ajout d'une couche de TiOz, même de faible épaisseur, permet d'obtenir des angles de contact inférieurs à 5°.

Dans le cas de la version polie, le dépôt d'une couche de TiOz, même s'il permet de diminuer légèrement l'angle de contact, ne permet pas d'obtenir des valeurs d'hydrophilie satisfaisantes, inférieures à 10°, conformément à ce que décrit l'art antérieur.

La figure 3 montre les angles de contact avec l'eau (AC, en degrés) après irradiation aux UV de certains de ces échantillons polis (P) et non-polis (NP) en fonction de l'épaisseur de la couche de TiOz (d(TiOz), en nm) déposée sur une couche de SnOz:F de 320 nm. Ces échantillons ont subi un même traitement thermique. La méthode de mesure de l'angle de contact est décrite plus en détail plus loin. La figure 3 montre que de façon surprenante, la trempe dégrade légèrement les propriétés d'hydrophilie des versions non-polies alors qu'elle améliore très sensiblement les propriétés d'hydrophilie des versions polies.

Les empilages utilisés pour illustrer l'invention dans les figures 1 à 3, permettent d'obtenir un vitrage présentant une émissivité comprise entre 0,14 et 0,16 avec une faible rugosité et une bonne hydrophilie.

Pour plus de clarté dans l'ensemble de ce document, nous adoptons les conventions suivantes :

- Les tests ont été réalisés sur des substrats en verre sodo-calcique dont l'épaisseur est de 4 mm.

- Par angle de contact (AC), nous entendons l'angle que fait la tangente à une goutte d'eau avec la surface du substrat. Selon les cas, l'angle de contact a été mesuré avec ou sans activation préalable par rayonnement UV. Cette activation du caractère hydrophile par irradiation UV est réalisée à 40°C pendant une période de 30 minutes au moyen d'UVA d'une puissance de 40 W/m$^2$ (UVA-340 nm 40 W/m$^2$, issu d'un appareil Q-Panel, de la compagnie Q-Lab, Cleveland, Ohio). Pour un impact significatif sur l'effet antibuée par la formation d'un film d'eau uniforme sur la surface du verre, il est nécessaire d'avoir un angle de contact inférieur à 10°, préférablement inférieur à 5°.

- La rugosité $R_q$ est la moyenne quadratique des écarts de hauteur z sur la surface d'évaluation et mesurés par rapport à la hauteur moyenne $\bar{z}$. La moyenne quadratique des écarts d'un profil est évaluée par microscope à force atomique (AFM) sur une surface de 10 µm fois 10 µm en N = 512 lignes de M = 512 points de mesure selon la formule suivante :

$$R_q = \sqrt{\frac{1}{M\,N} \sum_{x=1}^{N} \sum_{y=1}^{M} \big(z(x,y) - \bar{z}(N,M)\big)^2}\ .$$

Les mesures ont été réalisées en mode contact intermittent (tapping mode) avec une sonde de type Bruker NCHV, en Silicium dopé à l'antimoine, de raideur k entre 20 et 80 N/m, avec une fréquence de résonance entre 334 et 401 kHz et dont le rayon nominal de la pointe est de 10 nm.

- Les épaisseurs des couches renseignées ont été déterminées par fluorescence aux rayons X (XRF) sur base de courbes d'étalonnage. Ce sont des épaisseurs géométriques ou physiques.

## 5. Description de modes de réalisation préférés de l'invention

L'invention est illustrée par les exemples qui suivent et qui ne limitent en rien sa portée. Avantageusement la sous-couche, la couche d'oxyde transparent conducteur et la couche hydrophile sont obtenues par dépôt chimique en phase vapeur directement sur une ligne de production de verre sodo-calcique clair, avançant à une vitesse de 15 m/min et dont l'épaisseur est de 4 mm.

Un premier dispositif de revêtement situé au-dessus du bain d'étain, dans une zone où la température du verre est d'environ 745°C, permet par injection de silane ($SiH_4$), d'azote ($N_2$), de dioxyde de carbone ($CO_2$) et d'éthylène ($C_2H_4$), d'obtenir une sous-couche de $SiO_xC_y$ dont l'épaisseur est comprise entre 20 et 100 nm, de préférence entre 60 et 90 nm.

Après le dépôt de la sous-couche de $SiO_xC_y$, une couche d'oxyde transparent conducteur de $SnO_2$:F est déposée en injectant du MBTC (Monobutyl Tin Trichloride), de l'eau et du HF dans un flux d'air sur le substrat verrier au moyen d'un second dispositif de revêtement situé à l'entrée de la galerie à un endroit où la température du verre est comprise entre 600 et 620°C.

Finalement, une couche hydrophile de dioxyde de titane est obtenu par injection de TTIP et d'azote via un troisième dispositif de revêtement au-dessus du verre et de la couche d'oxyde transparent conducteur, à l'entrée de la galerie où la température du verre est comprise entre 580 et 600°C.

Ci-après trois exemples sont présentés. Conformément au premier mode de réalisation de l'invention, l'exemple 1, décrit un empilage « oxyde transparent conducteur / couche hydrophile » et a été soumis à un polissage en ligne. Les exemples 2 et 3 sont des contre-exemples, non-conformes à l'invention. Dans le cas de l'exemple 2, la couche de SnOz:F n'est pas surmontée d'une couche de TiOz et l'ensemble est poli. Enfin l'exemple 3 comprend bien une couche de TiOz sur le SnOz:F mais l'empilage n'a pas été poli. Le tableau 1 renseigne les paramètres d'injection des gaz au-dessus du verre pour les trois exemples.

Tableau 1 : paramètres d'injection de gaz

| exemples | Polissage | $SiO_xC_y$ | | | | $SnO_2$:F | | | | $TiO_2$ | |
|---|---|---|---|---|---|---|---|---|---|---|---|
| | | $N_2$ | $C_2H_4$ | $SiH_4$ | $CO_2$ | MBTC | $H_2O$/HF (3%) | $H_2O$ | Gaz (Air) | TTIP | $N_2$ |
| | | (kg/h) | (kg/h) | (kg/h) | (kg/h) | l/h | l/h | l/h | $Nm^3$/h | (l/h) | ($Nm^3$/h) |
| 1 | Oui | 2,3 | 3,7 | 0,95 | 7,4 | 32 | 8,6 | 7,4 | 800 | 2,0 | 850 |
| 2 | Oui | 2,3 | 3,7 | 0,95 | 7,4 | 32 | 8,6 | 7,4 | 800 | 0 | 850 |
| 3 | Non | 2,3 | 3,7 | 0,95 | 7,4 | 32 | 8,6 | 7,4 | 800 | 2,0 | 850 |

La rugosité des exemples 1 à 3 a été mesurée comme décrit plus haut. Le tableau 2 décrit les épaisseurs des couches obtenues selon les conditions définies dans le tableau 1 ainsi que la mesure de la rugosité $R_q$.

Tableau 2. Caractérisation des empilages obtenus.

| exemples | épaisseur $SiO_x$ (nm) | épaisseur $SnO_2$:F (nm) | épaisseur $TiO_2$* (nm) | $R_q$ (nm) |
|---|---|---|---|---|
| 1 (poli) | 75 | 320 | 18 | 4 |

(suite)

| exemples | épaisseur SiO$_x$ (nm) | épaisseur SnO$_2$:F (nm) | épaisseur TiO$_2$* (nm) | R$_q$ (nm) |
|---|---|---|---|---|
| 2 (poli) | 75 | 320 | 0 | 9 |
| 3 (non poli) | 75 | 320 | 18 | 14 |
| *dans ces exemples, le TiO$_2$ est cristallisé sous forme de rutile | | | | |

La rugosité (R$_q$) de l'empilage conforme à ce premier mode de réalisation de l'invention après polissage est inférieure à 5 nm présentant ainsi une surface très lisse, avec les avantages qui en découlent. Les inventeurs ont également étudié l'hydrophilie des exemples 1 à 3. L'hydrophilie est évaluée par la mesure de l'angle de contact d'une goutte d'eau, comme décrit plus haut.

Le tableau 3 décrit pour les exemples 1 à 3, l'angle de contact mesuré sur l'empilage sans irradiation et sur le même empilage ayant subi une activation par rayonnement UV. A partir des valeurs données dans le tableau 3, il apparaît, après activation UV, que le polissage d'un empilage comportant du TiO$_2$ diminue dans un premier temps le caractère hydrophile. En effet, avant traitement thermique, le contre-exemple 3 non-poli arrive à un angle de contact intermédiaire de 3° alors que l'exemple 1 poli ne descend qu'à 21°. Cependant ce caractère hydrophile reste supérieur à celui d'un empilage ne comportant pas de TiOz (exemple 1 vs contre-exemple 2).

Tableau 3. Valeurs de l'angle de contact sur des échantillons selon les exemples non traités thermiquement avant et après activation UV

| Exemples | Mesure de l'angle de contact (AC) | |
|---|---|---|
| | non activé | après activation UV (30 min) |
| 1 | 35° | 21° |
| 2 | 35° | 33° |
| 3 | 25° | 3° |

Les exemples 4, 5 et 6 ont été préparés de la même façon que les exemples 1, 2 et 3 respectivement, mais ils ont subi en plus un traitement thermique.

Conformément au deuxième mode de réalisation de l'invention, l'exemple 4, décrit un empilage « oxyde transparent conducteur / couche hydrophile » et a été soumis à un polissage en ligne ainsi qu'à un traitement thermique. Les exemples 5 et 6 sont des contre-exemples, non-conformes à l'invention. Dans le cas de l'exemple 5, la couche de SnOz:F n'est pas surmontée d'une couche de TiOz et l'ensemble est poli. Enfin l'exemple 6 comprend bien une couche de TiOz sur le SnOz:F mais l'empilage n'a pas été poli.

Le tableau 4 donne les angles de contact mesurés sur les exemples 4 à 6. De façon très surprenante, il ressort de ces données que le traitement thermique a légèrement dégradé le caractère hydrophile de l'empilage non poli du contre-exemple 6 alors qu'il a amélioré grandement le caractère hydrophile de l'empilage poli (exemple 4). En ce qui concerne l'empilage sans TiOz (contre-exemple 5), le traitement thermique n'a pas d'effet significatif.

Tableau 4. Valeurs de l'angle de contact sur des échantillons selon les exemples après traitement thermique avant et après activation UV

| Exemples | Mesure de l'angle de contact (CA) | |
|---|---|---|
| | non activé | après activation UV (30 min) |
| 4 | 28° | 9° |
| 5 | 29° | 27° |
| 6 | 25° | 7° |

Cette dernière observation montre que de manière très surprenante, un verre revêtu selon l'invention et traité thermiquement, a, en plus de ses propriétés anti-condensation, une faible rugosité et un très bon caractère hydrophile qui lui confère une propriété antibuée et facilite le nettoyage. En particulier, une rugosité aussi faible apporte à l'empilage une bonne résistance aux griffes et aux rayures.

**Revendications**

1. Substrat en verre muni d'un revêtement anti-condensation et antibuée, facile à nettoyer comprenant une couche d'oxyde transparent conducteur et une couche hydrophile choisie parmi les oxydes de Ti, Sn, W, Zn, Si, Al, Ag et Co ou le mélange d'un ou plusieurs de ces oxydes, **caractérisé en ce que** la rugosité $R_q$ de l'empilage est inférieure à 9 nm.

2. Substrat selon la revendication 1, **caractérisé en ce que** la couche d'oxyde transparent conducteur et la couche hydrophile sont des couches obtenues par dépôt chimique en phase vapeur.

3. Substrat selon l'une des revendications précédentes **caractérisé en ce que** la couche d'oxyde transparent conducteur a une épaisseur comprise entre 150 et 500 nm, de préférence entre 250 et 350 nm, de manière encore plus préférée entre 300 et 325 nm.

4. Substrat selon l'une des revendications précédentes **caractérisé en ce que** la couche à caractère hydrophile a une épaisseur comprise entre 5 et 50 nm, de préférence entre 5 et 30 nm et de manière encore plus préférée entre 5 et 10 nm.

5. Substrat selon une des revendications précédentes **caractérisé en ce que** la couche à caractère hydrophile est une couche à base de dioxyde de titane.

6. Substrat selon la revendication 5 **caractérisé en ce que** la couche à caractère hydrophile est une couche de dioxyde de titane.

7. Substrat selon la revendication 5 **caractérisé en ce que** la couche de dioxyde de titane est dopée avec de l'étain.

8. Substrat selon la revendication 7 **caractérisé en ce que** le pourcentage atomique Sn/Ti est inférieur à 10%, de préférence inférieur à 5%.

9. Substrat selon l'une des revendications précédentes **caractérisé en ce que** la rugosité $R_q$ est inférieure à 5 nm.

10. Substrat selon une des revendications précédentes **caractérisé en ce que** la couche d'oxyde transparent conducteur est choisie parmi l'oxyde d'indium dopé à l'étain (ITO), l'oxyde de zinc dopé à l'aluminium (ZnO:Al), l'oxyde de zinc dopé à l'indium (ZnO:In), l'oxyde de zinc dopé à l'étain (ZnO:Sn), l'oxyde d'étain dopé au fluor ($SnO_2$:F) ou l'oxyde d'étain dopé à l'antimoine ($SnO_2$:Sb).

11. Substrat selon une des revendications précédentes **caractérisé en ce que** la couche de l'oxyde transparent conducteur est une couche d'oxyde d'étain dopé au fluor.

12. Substrat selon une des revendications précédentes **caractérisé en ce que** la couche d'oxyde transparent conducteur est déposé sur une sous-couche.

13. Substrat selon la revendication précédente **caractérisé en ce que** la sous-couche est une couche à base de silicium.

14. Substrat selon la revendication précédente **caractérisé en ce que** la sous-couche à base de silicium est une monocouche constituée essentiellement d'oxynitrures ou d'oxycarbures de silicium.

15. Substrat selon une des revendication précédentes **caractérisé en ce que** la sous-couche a une épaisseur comprise entre 55 et 95 nm.

16. Substrat selon une des revendications précédentes **caractérisé en ce qu'**il a été soumis à un traitement thermique.

17. Substrat selon la revendication précédente **caractérisé en ce que** l'angle de contact à l'eau est au plus égal à 10°, de préférence au plus égal à 7°, après une irradiation dudit revêtement pendant 30 minutes à 40°C au moyen d'UVA d'une puissance de 40 W/m$^2$.

18. Procédé d'obtention du substrat décrit à la revendication 1 comprenant le dépôt par dépôt chimique en phase vapeur d'une couche d'oxyde transparent conducteur, le dépôt par dépôt chimique en phase vapeur d'une couche de dioxyde de titane et le polissage de l'empilage ainsi obtenu.

19. Utilisation du substrat selon une des revendications 1 à 17 dans des vitrages destinés à l'automobile.

**Patentansprüche**

1. Glassubstrat, das mit einer leicht zu reinigenden Antikondensations- und Antibeschlagbeschichtung versehen ist, die eine Schicht aus einem transparenten leitfähigen Oxid und eine hydrophile Schicht umfasst, die aus den Oxiden von Ti, Sn, W, Zn, Si, Al, Ag und Co oder einer Mischung von einem oder mehreren dieser Oxide ausgewählt ist, **dadurch gekennzeichnet, dass** die Rauheit $R_q$ des Stapels kleiner als 9 nm ist.

2. Substrat nach Anspruch 1, **dadurch gekennzeichnet, dass** es sich bei der Schicht aus einem transparenten leitfähigen Oxid und der hydrophilen Schicht um Schichten handelt, die durch ein chemisches Aufdampfen erhalten werden.

3. Substrat nach einem der vorhergehenden Ansprüche, **dadurch gekennzeichnet, dass** die Schicht aus einem transparenten leitfähigen Oxid eine Dicke zwischen 150 und 500 nm, vorzugsweise zwischen 250 und 350 nm, noch mehr bevorzugt zwischen 300 und 325 nm, aufweist.

4. Substrat nach einem der vorhergehenden Ansprüche, **dadurch gekennzeichnet, dass** die Schicht mit hydrophiler Beschaffenheit eine Dicke zwischen 5 und 50 nm, vorzugsweise zwischen 5 und 30 nm, noch mehr bevorzugt zwischen 5 und 10 nm, aufweist.

5. Substrat nach einem der vorhergehenden Ansprüche, **dadurch gekennzeichnet, dass** es sich bei der Schicht mit hydrophiler Beschaffenheit um eine Schicht auf Basis von Titandioxid handelt.

6. Substrat nach Anspruch 5, **dadurch gekennzeichnet, dass** es sich bei der Schicht mit hydrophiler Beschaffenheit um eine Titandioxid-Schicht handelt.

7. Substrat nach Anspruch 5, **dadurch gekennzeichnet, dass** die Titandioxid-Schicht mit Zinn dotiert ist.

8. Substrat nach Anspruch 7, **dadurch gekennzeichnet, dass** der Sn/Ti-Atomprozentwert weniger als 10 %, vorzugsweise weniger als 5 %, beträgt.

9. Substrat nach einem der vorhergehenden Ansprüche, **dadurch gekennzeichnet, dass** die Rauheit $R_q$ kleiner als 5 nm ist.

10. Substrat nach einem der vorhergehenden Ansprüche, **dadurch gekennzeichnet, dass** die Schicht aus einem transparenten leitfähigen Oxid aus mit Zinn dotiertem Indiumoxid (ITO), mit Aluminium dotiertem Zinkoxid (ZnO:Al), mit Indium dotiertem Zinkoxid (ZnO:In), mit Zinn dotiertem Zinkoxid (ZnO:Sn), mit Fluor dotiertem Zinnoxid ($SnO_2$:F) oder mit Antimon dotiertem Zinnoxid ($SnO_2$:Sb) ausgewählt ist.

11. Substrat nach einem der vorhergehenden Ansprüche, **dadurch gekennzeichnet, dass** es sich bei der Schicht aus einem transparenten leitfähigen Oxid um eine Schicht aus mit Fluor dotiertem Zinnoxid handelt.

12. Substrat nach einem der vorhergehenden Ansprüche, **dadurch gekennzeichnet, dass** die Schicht aus einem transparenten leitfähigen Oxid auf einer Unterschicht abgeschieden ist.

13. Substrat nach dem vorhergehenden Anspruch, **dadurch gekennzeichnet, dass** es sich bei der Unterschicht um eine Schicht auf Siliciumbasis handelt.

14. Substrat nach dem vorhergehenden Anspruch, **dadurch gekennzeichnet, dass** es sich bei der Unterschicht auf Siliciumbasis um eine Monoschicht handelt, die im Wesentlichen aus Siliciumoxynitriden oder -oxycarbiden besteht.

15. Substrat nach einem der vorhergehenden Ansprüche, **dadurch gekennzeichnet, dass** die Unterschicht eine Dicke zwischen 55 und 95 nm aufweist.

16. Substrat nach einem der vorhergehenden Ansprüche, **dadurch gekennzeichnet, dass** es einer Wärmebehandlung unterzogen wurde.

17. Substrat nach dem vorhergehenden Anspruch, **dadurch gekennzeichnet, dass** der Wasserkontaktwinkel nach einer 30-minütigen Bestrahlung der Beschichtung mit UVA mit einer Leistung von 40 W/m$^2$ bei 40 °C höchstens gleich 10°, vorzugsweise höchstens gleich 7°, beträgt.

18. Verfahren zum Erhalt des in Anspruch 1 beschriebenen Substrats, das die Abscheidung durch chemisches Aufdampfen einer Schicht aus einem transparenten leitfähigen Oxid, die Abscheidung durch chemisches Aufdampfen einer Titandioxid-Schicht und das Polieren des so erhaltenen Stapels umfasst.

19. Verwendung des Substrats nach einem der Ansprüche 1 bis 17 in für ein Kraftfahrzeug vorgesehenen Verglasungen.

**Claims**

1. Glass substrate provided with an anti-condensation and anti-fog coating, which is easy to clean, comprising a transparent conducting oxide layer and a hydrophilic layer chosen from oxides of Ti, Sn, W, Zn, Si, Al, Ag and Co or the mixture of one or more of these oxides, **characterized in that** the roughness $R_q$ of the stack is less than 9 nm.

2. Substrate according to Claim 1, **characterized in that** the transparent conducting oxide layer and the hydrophilic layer are layers obtained by chemical vapour deposition.

3. Substrate according to either of the preceding claims, **characterized in that** the transparent conducting oxide layer has a thickness of between 150 and 500 nm, preferably between 250 and 350 nm, even more preferably between 300 and 325 nm.

4. Substrate according to one of the preceding claims, **characterized in that** the layer of hydrophilic nature has a thickness of between 5 and 50 nm, between 5 and 30 nm and even more preferably between 5 and 10 nm.

5. Substrate according to one of the preceding claims, **characterized in that** the layer of hydrophilic nature is a layer based on titanium dioxide.

6. Substrate according to Claim 5, **characterized in that** the layer of hydrophilic nature is a titanium dioxide layer.

7. Substrate according to Claim 5, **characterized in that** the titanium dioxide layer is doped with tin.

8. Substrate according to Claim 7, **characterized in that** the Sn/Ti atomic percentage is less than 10%, preferably less than 5%.

9. Substrate according to one of the preceding claims, **characterized in that** the roughness $R_q$ is less than 5 nm.

10. Substrate according to one of the preceding claims, **characterized in that** the transparent conducting oxide layer is chosen from tin-doped indium oxide (ITO), aluminium-doped zinc oxide (ZnO:Al), indium-doped zinc oxide (ZnO:In), tin-doped zinc oxide (ZnO:Sn), fluorine-doped tin oxide ($SnO_2$:F) or antimony-doped tin oxide ($SnO_2$:Sb).

11. Substrate according to one of the preceding claims, **characterized in that** the transparent conducting oxide layer is a layer of fluorine-doped tin oxide.

12. Substrate according to one of the preceding claims, **characterized in that** the transparent conducting oxide layer is deposited on a sublayer.

13. Substrate according to the preceding claim, **characterized in that** the sublayer is a silicon-based layer.

14. Substrate according to the preceding claim, **characterized in that** the silicon-based sublayer is a monolayer formed essentially of silicon oxynitrides or silicon oxycarbides.

15. Substrate according to one of the preceding claims, **characterized in that** the sublayer has a thickness of between 55 and 95 nm.

**16.** Substrate according to one of the preceding claims, **characterized in that** it has been subjected to a heat treatment.

**17.** Substrate according to the preceding claim, **characterized in that** the water contact angle is at most equal to 10°, preferably at most equal to 7°, after irradiating said coating for 30 minutes at 40°C using UVA with a power of 40 W/m$^2$.

**18.** Process for obtaining the substrate described in Claim 1, comprising the deposition by chemical vapour deposition of a transparent conducting oxide layer, the deposition by chemical vapour deposition of a titanium dioxide layer and the polishing of the resulting stack.

**19.** Use of the substrate according to one of Claims 1 to 17, in glazings intended for the automotive industry.

Fig. 1

Fig. 2

Fig. 3

## RÉFÉRENCES CITÉES DANS LA DESCRIPTION

**Documents brevets cités dans la description**

- WO 2014198543 A
- EP 0573325 A1
- FR 3018801 A1
- FR 2963343 A1
- US 2003162033 A1
- EP 1304366 A1
- WO 9710186 A1
- EP 1366000 A2
- EP 882686 B1
- WO 1997010186 A1